# FASCICULE DE BREVET EUROPEEN

(11) **EP 2 846 075 B1**
(45) Date de publication et mention de la délivrance du brevet: **09.08.2017**
(21) Numéro de dépôt: 14183810.2
(22) Date de dépôt: 05.09.2014
(51) Int. Cl.: F21S 8/00, F21V 21/00, F21V 25/00, H02G 3/20, F21V 31/00, F21V 15/00

(54) **Dispositif de coiffage de spot encastrable**
Abdeckungsvorrichtung eines Einbau-Strahlers
Device for covering a recessed spotlight

(30) Priorité: 06.09.2013 FR 1358562
(43) Date de publication de la demande: 11.03.2015
(73) Titulaire: Hellermanntyton, 78190 Trappes (FR)
(72) Inventeur: Cherdo, Pascal, 78650 BEYNES (FR); Rodriguez, Manuel, 94100 SAINT MAUR (FR); Nampon, Damien, 94480 ABLON SUR SEINE (FR); Truchot, Jean-Philippe, 78500 SARTROUVILLE (FR)
(74) Mandataire: Delphi France SAS

(56) Documents cités:
- EP-A1- 2 518 400
- EP-A2- 0 662 742
- EP-A2- 1 132 682
- DE-A1- 4 428 735
- DE-A1-102008 028 871
- FR-A1- 2 912 845
- FR-A3- 2 797 357
- US-A- 5 420 376
- US-A1- 2004 001 336

## Description

L'invention concerne le coiffage de spot encastrable.

On connaît des systèmes de ventilation pour un spot encastré dans un plafond recouvert d'isolant qui se caractérise par une association d'un spot à encastrer, d'un dispositif de coiffage de type cloche solidaire du spot recevant une lampe et d'un tube creux. De tels systèmes sont agencés pour éviter l'intervention d'un utilisateur par le dessus du plafond. On peut citer le document FR 2 932 246.

Il est en outre connu un spot encastré dans un plafond comprenant un dispositif de coiffage définissant un rebord contre lequel un ressort du spot exerce une force de maintien. Le dispositif de coiffage assure d'une part la fonction de coiffage et l'étanchéité autour de l'orifice de passage de la lampe. Toutefois, selon cet agencement, le remplacement d'une lampe nécessite le démontage du dispositif de coiffage et le remontage de cet élément, ce qui peut altérer, à l'usage, l'étanchéité au niveau du rebord et du plafond. En outre, une fois le dispositif de coiffage et le spot installés, il est nécessaire d'exercer un mouvement vers la partie supérieure du plafond afin d'installer la lampe et le(s) dispositifs(s) électrique(s) requis pour son fonctionnement. US 5 420 376, EP 1 132 682, EP 0 662 742, DE 44 28 735 et DE 10 2008 028 871 décrivent des dispositifs de coiffage de spot.

Il existe un besoin pour un coiffage de spot plus pratique à mettre en oeuvre, de maintenance facilitée et permettant d'assurer une étanchéité au niveau de l'orifice de passage du spot.

L'invention, décrite à la revendication 1, concerne ainsi un dispositif de coiffage de spot encastrable, destiné à être installé dans une paroi, comprenant :
- une base présentant une surface interne, une surface externe opposée à la surface interne, une épaisseur et une ouverture traversant toute l'épaisseur, la surface externe de la base étant en contact avec la paroi en position de montage, la base étant de forme annulaire de diamètre interne Di et de diamètre externe De,
- un élément de coiffage apte à coiffer un spot comprenant une partie supérieure et au moins une partie latérale, ladite partie latérale ayant une extrémité supérieure en contact avec la partie supérieure et une extrémité inférieure qui est fixée de façon amovible à la surface interne de la base, la surface externe de la base étant en contact avec la paroi en position de montage,
- l'extrémité inférieure de la partie latérale est fixée de façon amovible à la surface interne de la base,
- la base comprend des éléments de réception sur sa surface interne destinés à recevoir l'extrémité inférieure de la partie latérale de l'élément de coiffage, les dits éléments de réception étant au moins deux rails ou deux lèvres espacé (e) s les un(e)s des autres,
- les deux rails ou deux lèvres comportent respectivement des ouvertures traversantes, dont l'une est définie de façon perpendiculaire à la direction radiale et une autre est définie dans la direction radiale, ces ouvertures définissant une première partie d'un dispositif de verrouillage à baïonnette agencée pour recevoir la deuxième partie complémentaire du dispositif de verrouillage, à savoir des excroissances situées sur l'extrémité libre de la partie latérale de l'élément de coiffage.
Dans la présente invention, le terme paroi désigne tout type de cloison. On peut citer, par exemple, un mur, un sol ou un plafond.

Ainsi, le dispositif de coiffage peut être encastré, dans un système de faux-plafond de type à dalles ou plaques et/ou ossature (suspendue ou fixée par un autre moyen), mais l'invention n'est pas limitée aux systèmes de faux-plafond. On pourrait par exemple prévoir le montage du dispositif de coiffage dans un plafond classique, par exemple à poutres, dans l'épaisseur du plafond. Le plafond peut comporter une partie inférieure comportant une couche basse, par exemple un ensemble de dalles reposant sur une ossature support ou des plaques de Placoplatre^{®}, cette couche basse étant disposée de façon à ménager un espace interne susceptible de recevoir de la matière isolante sous forme de nappe, projetée et/ou autre. L'invention n'est en rien limitée par le type de faux-plafond dans lequel le dispositif de coiffage peut être installé. Pour des raisons pratiques, il peut être prévu un accès réalisé sur une partie supérieure du plafond ou faux plafond, depuis le dessus vers le dessous, c'est-à-dire vers la partie inférieure, pour le passage du dispositif de coiffage et son positionnement fonctionnel par exemple sur ladite couche basse.

On pourrait également prévoir le montage du dispositif selon l'invention dans un mur.

L'invention pourra notamment trouver des applications dans les murs, plafonds et faux-plafonds d'habitation, de bureaux, de parties communes d'immeubles, ou de bâtiments basse consommation.

Ainsi, la fixation amovible de l'élément de coiffage avec la base permet un retrait et une réinstallation de l'élément de coiffage sur la base, ce qui engendre une amélioration de l'étanchéité au niveau de la paroi, permettant ainsi d'accroître l'isolation thermique en évitant notamment des ponts thermiques au niveau de l'ouverture destinée au passage de la lampe. En effet, il n'est plus nécessaire de retirer tous les éléments du dispositif de coiffage pour accéder par exemple au dispositif électrique de la lampe, tel que domino ou fils électriques, ce qui réduit l'altération, à l'usage, de ladite étanchéité.

Par ailleurs, on peut, d'une part, procéder à un branchement plus pratique des différents éléments électriques, notamment pour le fonctionnement de la lampe, et, d'autre part, réaliser une maintenance facilitée du spot, car l'accès dans le volume intérieur du dispositif de coiffage, dit volume interne, ne nécessite une manipulation que d'un seul élément et non d'un ensemble. Par exemple, le branchement des différents câbles électriques peut être réalisé avant la solidarisation de l'élément de coiffage avec la base, et ce sans manipulation de cette dernière.

Selon l'invention, la base peut présenter différentes formes à condition de présenter une ouverture. A titre d'exemple, on peut citer une base de forme rectangulaire, carrée, ovale ou circulaire.

Selon un mode de réalisation particulier, la base est un élément annulaire présentant un diamètre interne Di compris entre 4cm et 12cm, de préférence entre 6cm et 9cm et un diamètre externe De compris entre 14cm et 26cm, de préférence entre 16cm et 20cm.

Les diamètres Di et De seront choisis afin que l'élément annulaire présente une ouverture d'une dimension adaptée au spot à installer.

L'épaisseur de la base est comprise entre 1mm et 4mm.

Une fois le dispositif de l'invention installé dans une paroi, la surface externe de la base est donc en contact avec la paroi et la surface interne est en contact avec l'extrémité inférieure de la partie latérale de l'élément de coiffage.

Le dispositif de coiffage peut en outre comprendre un dispositif d'étanchéité situé sur la surface externe de la base. Ainsi, une fois le dispositif de l'invention installé dans la paroi, l'élément d'étanchéité sera disposé entre la surface externe et la paroi et permet ainsi d'améliorer l'étanchéité.

Le dispositif d'étanchéité peut être par exemple une collerette souple disposée sur la surface externe et/ou la surface externe peut comprendre un logement creux agencé pour recevoir un cordon de matière isolante, telle qu'un polymère de silicone ou un ruban adhésif de type double-face. La présence du dispositif d'étanchéité permet également d'assurer un maintien fixe de la base sur la paroi, notamment lors du retrait ou de la réinstallation de l'élément de coiffage.

Selon un mode de réalisation, la base comprend au moins une protubérance sur sa surface externe.

Le nombre de protubérances est avantageusement compris entre 4 et 40, de préférence entre 12 et 24.

Les protubérances peuvent être hémisphériques, rectangulaires ou triangulaires, de préférence triangulaires.

Ainsi, selon ce mode de réalisation, lorsque que le dispositif de coiffage est monté dans une paroi, la protubérance s'enfonce par force dans la paroi et ainsi la base est fixée de façon inamovible sur la paroi pour garantir l'étanchéité.

La surface interne de la base peut en outre avantageusement comprendre des éléments de réception tels que des rails ou des lèvres, disposés autour de l'ouverture de la base, en particulier au moins deux rails ou deux lèvres, espacées l'une de l'autre parallèlement. Ces éléments de réception disposés sur la surface interne sont destinés à recevoir l'extrémité inférieure de la partie latérale de l'élément de coiffage et permettent d'assurer une liaison étanche et de maintenir en position l'élément de coiffage et la base.

Selon un mode de réalisation particulier, un joint est positionné dans lesdits éléments de réception, de préférence dans un logement défini par l'espacement entre les éléments de réception pour assurer l'étanchéité entre l'élément de coiffage et la base.

Il peut être avantageusement prévu un dispositif de verrouillage de l'élément de coiffage avec la base. Le verrouillage peut être de type baïonnette, par exemple quart de tour, ou mis en oeuvre par vissage ou clipsage d'un élément avec l'autre. Par conséquent, l'élément de coiffage et la base comprennent chacun une partie complémentaire de verrouillage. Le dispositif de verrouillage permet la solidarisation efficace, de façon amovible, de l'élément de coiffage par rapport à la base.

Par exemple, lorsque les éléments de réception de la surface interne de la base sont au moins deux lèvres ou deux rails, ces derniers comportent respectivement des ouvertures traversantes, dont l'une est définie de façon perpendiculaire à la direction radiale et une autre est définie dans la direction radiale. Ces ouvertures peuvent être au nombre d'au moins deux, de préférence quatre, et définissent une première partie d'un dispositif de verrouillage de type baïonnette agencée pour recevoir la deuxième partie complémentaire du dispositif de verrouillage, à savoir des excroissances situées sur l'extrémité libre de la partie latérale de l'élément de coiffage.

Ainsi, chaque excroissance de la partie latérale de l'élément de coiffage coopère avec chaque ouverture des éléments de réception de la surface interne de la base et permet la solidarisation amovible après un mouvement de rotation de verrouillage.

L'élément de coiffage comprend une partie supérieure et au moins une partie latérale. Selon l'invention, une extrémité de la partie latérale dite inférieure est en contact avec la surface interne de la base et une extrémité de la partie latérale dite supérieure est en contact avec la partie supérieure de l'élément de coiffage.

Selon un mode de réalisation particulier, la partie supérieure et la partie latérale sont réalisées en une seule pièce.

L'élément de coiffage n'est nullement limité, et peut avantageusement définir une enveloppe de coiffage par exemple à forme de cloche, apte à loger et à protéger le spot de son milieu environnant.

Selon un mode de réalisation, la partie supérieure et/ou la partie latérale de l'élément de coiffage comprend au moins un trou traversant (pas nécessairement circulaire) notamment prévu pour le passage d'un élément de jonction électrique, tel qu'un domino, un raccord électrique et/ou câble(s) électrique(s).

Selon un mode de réalisation particulier, le dispositif de l'invention comprend un trou traversant qui s'étend de la partie supérieure jusqu'à la partie latérale de l'élément de coiffage, de préférence jusqu'à l'extrémité supérieure de la partie latérale.

Selon ce mode de réalisation, la partie du trou traversant située sur la partie supérieure peut être fermé par une pièce en matériau polymère par exemple et la partie du trou traversant située sur la partie latérale peut être fermée à l'aide d'un obturateur par exemple.

Selon un autre mode de réalisation pouvant être combiné aux précédents, la partie latérale de l'élément de coiffage comporte une partie d'extension, s'étendant selon un axe horizontal ou selon un axe vertical.

Selon un mode de réalisation particulier, la partie d'extension s'étend depuis l'extrémité inférieure jusqu'à l'extrémité supérieure de ladite partie latérale.

Selon un mode de réalisation, la partie d'extension peut s'écarter de la verticalité d'un angle compris entre ± 10°, de préférence ± 20°. Ainsi, dans ce mode de réalisation, le trou traversant peut s'étendre dans cette partie d'extension et ainsi peut déboucher au-delà de la partie supérieure du dispositif de coiffage et permettre de ce fait une manipulation plus simple des éléments de jonction électrique.

Selon un mode de réalisation pouvant être combiné aux précédents, le dispositif de l'invention comprend un élément support dans l'élément de coiffage. Cet élément support est prévu pour contenir et supporter au moins un élément de jonction électrique ou tout autre élément électrique susceptible d'être requis pour le fonctionnement du spot. Selon un mode de réalisation particulier, l'élément support se situe au niveau du trou traversant, et de préférence au niveau de la partie d'extension. Ainsi, il est possible d'isoler les éléments électriques du spot tout en facilitant leur accès par le trou traversant.

De préférence, des extrémités de bord de la partie supérieure et/ou latérale définissant le trou traversant peuvent en outre comprendre un joint en un matériau souple, tel qu'un matériau polymère par exemple en EPDM, permettant de réaliser l'étanchéité. Une pièce en matériau polymère avec des moyens de fermeture, tels que des vis ou autres, peut également être prévue pour la fermeture du trou traversant et l'arrêt par exemple de câbles électriques, par compression du joint.

Le spot n'est nullement limité ni dans la taille ni dans la forme. Le spot peut être classiquement monté et positionné sur une paroi, tout comme le dispositif de coiffage, depuis un passage ménagé d'une partie supérieure de la paroi vers sa partie inférieure. Le spot peut comporter une lampe montée sur un socle comportant avantageusement au moins un élément ressort, de préférence au moins deux éléments ressort, ou bien un autre moyen de plaquage apte à exercer une force contre la base de façon à plaquer cette base contre le plafond.

Une fois le spot installé, l'élément ressort permet d'exercer une force contre la surface interne de la base de façon à plaquer cette base contre le plafond. L'élément ressort permet d'assurer la compression du dispositif d'étanchéité situé entre le plafond et la surface externe de la base, ce qui assure un surcroît d'étanchéité.

Un autre objet de l'invention concerne également une paroi comportant au moins un dispositif de coiffage de spot encastrable tel que décrit ci-dessus.

Selon un mode de réalisation, la paroi est un plafond, qui peut par exemple comprendre un système de faux-plafond comprenant en outre des éléments classiques de faux-plafond, par exemple une ossature comprenant par exemple des longerons, des dalles ou plaques de faux-plafond, des éléments pour suspendre l'ossature, des lampes encastrables, et/ou autres.

Un autre objet de l'invention est un kit comprenant le dispositif de coiffage de l'invention avec un spot encastrable comprenant une lampe et un socle. Selon un mode de réalisation particulier, le socle comprend également au moins un élément ressort.

L'invention est maintenant décrite en référence aux dessins annexés, non limitatifs, dans lesquels :
- la figure 1 est une vue éclatée d'un dispositif de coiffage comprenant un élément de coiffage et une base annulaire, désolidarisés entre eux, selon un exemple de réalisation,
- la figure 2 est une vue en coupe selon un plan vertical d'un dispositif de coiffage et d'un spot fixé sur un plafond,
- la figure 3 est une vue partielle de dessous en perspective du dispositif de coiffage selon un autre exemple de réalisation.

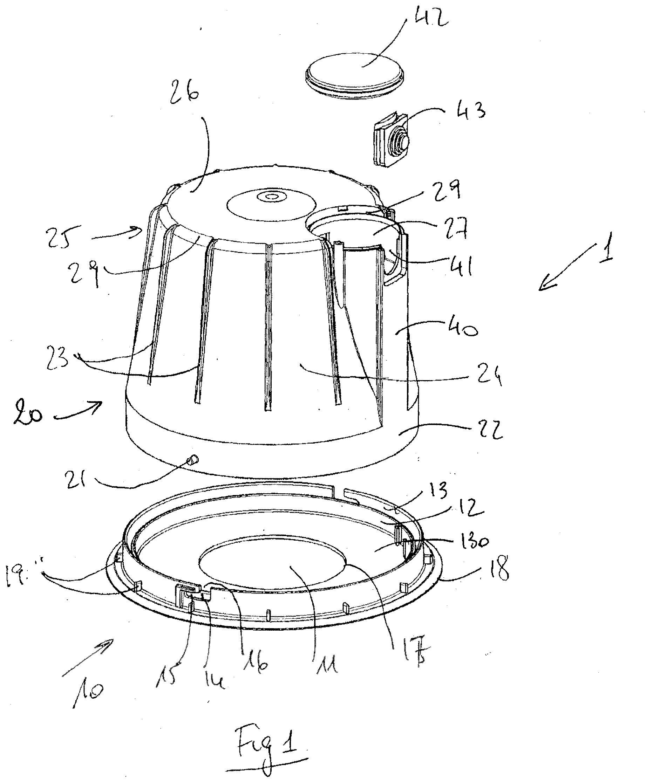

En référence à la figure 1, le dispositif de coiffage 1 comprend une base se présentant sous la forme d'un élément annulaire 10 (appelé également base annulaire 10) ayant un diamètre interne Di et un diamètre externe De. L'élément annulaire 10 présente une ouverture centrale circulaire 11, qui est habituellement de la même taille que celui pratiqué au plafond ou faux-plafond, et un élément de coiffage 20 ayant ici la forme d'une enveloppe à forme générale de cloche.

Le dispositif de coiffage 10 est en matériau autoextinguible résistant à la chaleur. A titre d'exemple, on peut citer le polyamide 6 ou le polyamide 66.

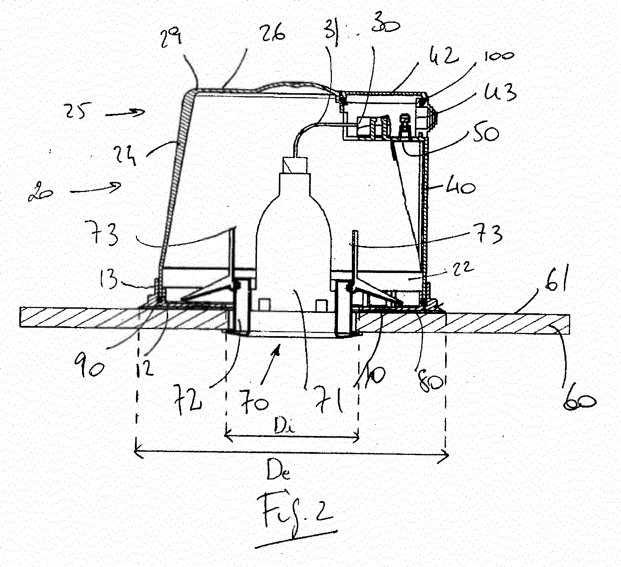

Le dispositif de coiffage 1 est destiné à être positionné autour d'un trou de plafond (figure 2). De la matière isolante à forme de flocons ou analogue peut être projetée à l'intérieur du plafond, ce qui permet d'assurer l'isolation. Ce dispositif de coiffage 1 lorsqu'il est installé est apte à entourer un spot, et permet d'isoler la lampe de la matière isolante du plafond (sans risque de surchauffe de la lampe) (non représentés).

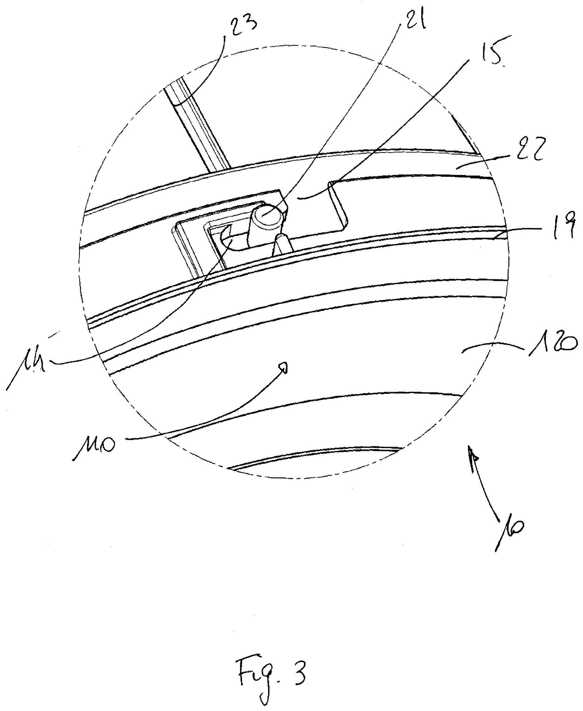

La base annulaire 10 est solidarisée à l'élément de coiffage 20 au niveau de la surface interne de la base annulaire 10. La base annulaire 10 comprend une surface externe 120 en contact avec le plafond (visible à la figure 3) opposée à la surface interne 130.

Comme montré à la figure 3, la surface externe de la base annulaire 10 comprend une pluralité de protubérances 110 (dont une est seule représentée) étant destinées à venir s'enfoncer dans le plafond 60 pour assurer le maintien en position fixe du dispositif de coiffage 1.

La surface interne de la base annulaire comprend des éléments de réception, ici deux lèvres circulaires concentriques 12,13, de diamètres respectifs d₁₂ et d₁₃ destinés à recevoir l'extrémité inférieure 22 de la partie latérale de l'élément de coiffage 20. Les diamètres respectifs étant tels que de>d₁₃>d₁₂>di. Les lèvres 12,13 sont espacées l'une de l'autre afin de définir un logement de réception d'un joint d'étanchéité 90, comme visible sur la figure 2. Le joint d'étanchéité 90 peut être à base de polymère silicone.

Le dispositif de coiffage 1 comporte un dispositif de verrouillage de l'élément de coiffage 20 avec la base annulaire 10.

Ainsi, la lèvre 13 est conformée pour présenter une hauteur supérieure à celle de la lèvre 12 afin de comporter respectivement des ouvertures 14,15 traversantes, dont l'une est définie de façon perpendiculaire à la direction radiale et une autre est définie dans la direction radiale. Ces ouvertures 14,15, peuvent être au nombre d'au moins deux, de préférence quatre, et définissent une première partie d'un dispositif de verrouillage de type baïonnette agencées pour recevoir la deuxième partie complémentaire du dispositif de verrouillage, à savoir des excroissances 21 situées sur la partie latérale de l'élément de coiffage (20), chaque excroissance coopérant avec chaque ouverture 14,15 et permettant la solidarisation amovible après un mouvement de rotation de verrouillage. La lèvre 12 comporte également des ouvertures 16 pour le passage des excroissances 21. Le détail du dispositif de verrouillage est donné à la figure 3.

La surface externe de la lèvre 13 comporte une pluralité d'excroissances 19 formant saillies selon un axe radial. Ces excroissances 19 améliorent la rigidité de la base et empêchent un mouvement intempestif de rotation de la base avec l'élément de coiffage.

L'élément de coiffage 20 définit une enveloppe de coiffage à forme de cloche, apte à loger et à protéger le spot de son milieu environnant. L'élément de coiffage 20 comporte une partie supérieure 26 sensiblement perpendiculaire à un plan horizontal (plan du plafond), une partie latérale généralement conique 24 comprenant une extrémité dite inférieure 22 destinée à venir en contact avec la surface interne de la base annulaire et une extrémité dite supérieure 25 en contact avec la partie supérieure 26 de l'élément de coiffage 20.

Le diamètre de l'extrémité inférieure 22 de la partie latérale est compris entre d₁₃ et d₁₂. Ainsi l'extrémité inférieure 22 de la partie latérale conique 24 de l'élément de coiffage 20 est agencée pour se loger dans l'espace défini entre les deux lèvres concentriques 12,13, comme montré à la figure 2.

L'élément de coiffage 20 comporte sur sa surface externe une pluralité de rainures 23, dont six sont visibles sur la figure 1, disposées sur la partie latérale conique 24. Ces rainures 23 sont destinées à favoriser la préhension de l'élément de coiffage notamment pour un retrait ou une réinstallation après désolidarisation, et en assurer la rigidité.

La partie latérale 24 comporte une partie d'extension 40, s'étendant selon un axe vertical, depuis l'extrémité inférieure 22 jusqu'à l'extrémité supérieure 25 de la partie latérale conique 24 de l'élément de coiffage 20. En variante, la partie d'extension 40 peut s'écarter de la verticalité par exemple de ± 20°.

Au niveau de cette partie d'extension 40, l'élément de coiffage comprend un trou traversant. Ce trou traversant présente une première partie 27 sur la partie supérieure 26 du dispositif de coiffage et s'étend en une seconde partie 41 sur la partie latérale 24.

La première partie du trou traversant 27 est adaptée au passage d'un élément de jonction électrique 30, tel qu'un domino, un raccord électrique et/ou câble(s) électrique(s) 31, comme visibles à la figure 2.

La première partie du trou traversant 27 peut être fermée, sur la partie supérieure 26, par une pièce en matériau polymère 42, ici un élément d'obturation ayant la forme d'un disque.

La deuxième partie du trou traversant 41 est adaptée au passage de câbles électriques et est fermée à l'aide d'un obturateur 43, de forme rectangulaire, lequel est ici disposé perpendiculairement à l'élément d'obturation 42. L'obturateur 43 est également agencé pour assurer l'étanchéité dans cette zone.

Les extrémités de bord 29 de la partie supérieure 25 définissant la première partie du trou traversant 27 comprennent un joint 100 en un matériau souple permettant de réaliser l'étanchéité entre l'obturateur 43 et les extrémités de bord 29 (figure 2).

La figure 2 est une vue en coupe selon un plan vertical d'un dispositif de coiffage 1 et d'un spot 70 fixé sur un plafond 60, selon un exemple de réalisation.

L'élément de coiffage 20 forme une cloche destinée à envelopper le spot 70, et comporte les éléments identiques ou similaires à ceux de la figure 1.

Le spot 70 comporte une lampe 71 montée sur un socle 72 comportant deux éléments ressort 73. La lampe 71 est montée encastrée dans le plafond 60, lequel est un système de faux-plafond, grâce à un trou ménagé dans le plafond. La lampe 71 est pourvue d'un câble électrique 31 raccordé à un domino 30.

Les éléments ressort 73 maintiennent la base annulaire 10 plaquée contre la face interne 61 du plafond 60. Un élément d'étanchéité 80, tel qu'un joint torique, est placé entre cette face interne 61 et la base annulaire 10.

Le volume interne de l'élément de coiffage 20 comprend dans la partie d'extension 40 un élément support 50 d'au moins un élément de jonction électrique 30 requis pour le fonctionnement de la lampe 71. L'élément support 50 est situé au voisinage du trou traversant (27, 41). Chacune des parties 27 et 41 du trou traversant étant fermée respectivement par l'élément d'obturation 42 et l'obturateur 43 qui sont perpendiculaires entre eux.

Dans la présente demande, les termes « supérieur », « inférieur », « haut », « bas », « horizontal », « vertical », etc. sont à prendre dans le sens habituel de ces termes, le vecteur de gravité étant vertical et dirigé du haut vers le bas, pour un dispositif installé sur un plafond horizontal. Bien entendu le dispositif de coiffage peut être placé différemment, notamment lors de son transport.

## Revendications

1. Dispositif de coiffage (1) de spot encastrable, destiné à être installé dans une paroi (60), comprenant :
- une base (10) présentant une surface interne, une surface externe opposée à la surface interne, une épaisseur et une ouverture (11) traversant toute l'épaisseur, la surface externe de la base étant en contact avec la paroi en position de montage, la base (10) étant de forme annulaire de diamètre interne Di et de diamètre externe De; et
- un élément de coiffage (20) apte à coiffer un spot comprenant une partie supérieure (26) et au moins une partie latérale (24), ladite partie latérale (24) ayant une extrémité supérieure (25) en contact avec la partie supérieure, **caractérisé en ce que** :
- l'extrémité inférieure (22) de la partie latérale (24) est fixée de façon amovible à la surface interne de la base (10) ;
- la base (10) comprend des éléments de réception (12,13) sur sa surface interne destinés à recevoir l'extrémité inférieure (22) de la partie latérale de l'élément de coiffage (20), les dits éléments de réception (12,13) étant au moins deux rails ou deux lèvres espacé(e)s les un(e)s des autres ;
- les deux rails ou deux lèvres (12, 13) comportent respectivement des ouvertures traversantes (14, 15), dont l'une est définie de façon perpendiculaire à la direction radiale et une autre est définie dans la direction radiale, ces ouvertures définissant une première partie d'un dispositif de verrouillage à baïonnette agencée pour recevoir la deuxième partie complémentaire du dispositif de verrouillage, à savoir des excroissances (21) situées sur l'extrémité libre (22) de la partie latérale de l'élément de coiffage (20).

2. Dispositif selon la revendication 1, **caractérisé en ce que** la base (10) comprend un dispositif d'étanchéité (80) sur sa surface externe.

3. Dispositif selon la revendication 1, **caractérisé par le fait qu'**un joint d'étanchéité (90) est disposé entre les éléments de réception (12,13).

4. Dispositif selon l'une des revendications précédentes, **caractérisé en ce que** la base (10) comprend au moins une protubérance (110) sur sa surface externe.

5. Dispositif selon l'une des revendications 1 à 4, comprenant en outre un dispositif de verrouillage (14,15,16,21) de l'élément de coiffage avec la base (10).

6. Dispositif selon l'une des revendications 1 à 5, dans lequel l'élément de coiffage (20) comprend un trou défini dans la partie supérieure (26) et/ou dans une extrémité supérieure (25) de la partie latérale en contact avec la partie supérieure (26).

7. Dispositif selon l'une des revendications 1 à 6, dans lequel l'élément de coiffage (20) comprend un trou s'étendant de la partie supérieure (26) définissant une première partie de trou (27) vers l'extrémité supérieure (25) de la partie latérale de l'élément de coiffage définissant une seconde partie de trou (41).

8. Dispositif selon la revendication 6 ou 7, dans lequel des extrémités de bord (29) de la partie supérieure (25) et/ou de la partie latérale (24) définissant le trou (27 ; 41) comprennent un joint (100) en un matériau souple.

9. Dispositif selon l'une des revendications précédentes, dans lequel la partie latérale (24) de l'élément de coiffage (20) comporte une partie d'extension (40).

10. Dispositif selon l'une des revendications 1 à 9, comprenant un élément support (50) dans l'élément de coiffage (20).

11. Paroi (60) comportant au moins un dispositif de coiffage (1) de spot encastrable, tel que défini selon l'une des revendications précédentes.

12. Kit comprenant le dispositif de coiffage défini selon l'une des revendications 1 à 11 avec un spot encastrable comprenant une lampe et un socle.

## Patentansprüche

1. Abdeckungsvorrichtung (1) zum Abdecken eines Einbau-Strahlers, die dazu bestimmt ist, in einer Wand (60) installiert zu werden, enthaltend:
- ein Basisteil (10) mit einer Innenfläche, einer der Innenfläche entgegengesetzten Außenfläche, einer Materialstärke und einer Öffnung (11), die die gesamte Materialstärke durchsetzt, wobei die Außenfläche des Basisteils in Montagestellung in Kontakt mit der Wand ist, wobei das Basisteil (10) ringförmig mit einem Innendurchmesser Di und einem Außendurchmesser De ist; und
- ein Abdeckelement (20), das dazu geeignet ist, einen Strahler abzudecken, und das einen oberen Abschnitt (26) und zumindest einen Seitenabschnitt (24) enthält, wobei der Seitenabschnitt (24) ein oberes Ende (25) hat, das mit dem oberen Abschnitt in Kontakt ist,
**dadurch gekennzeichnet, dass**
- das untere Ende (22) des Seitenabschnitts (24) abnehmbar an der Innenfläche des Basisteils (10) befestigt ist;
- das Basisteil (10) an seiner Innenfläche Aufnahmeelemente (12, 13) aufweist, die dazu bestimmt sind, das untere Ende (22) des Seitenabschnitts des Abdeckelements (20) aufzunehmen, wobei die Aufnahmeelemente (12, 13) aus zumindest zwei Schienen bzw. zwei Lippen bestehen, die voneinander beabstandet sind;
- die beiden Schienen bzw. die beiden Lippen (12, 13) jeweilige Durchgangsöffnungen (14, 15) aufweisen, von denen die eine senkrecht zur radialen Richtung und die andere in der radialen Richtung definiert ist, wobei diese Öffnungen einen ersten Teil einer Bajonettverriegelungsvorrichtung definieren, der dazu vorgesehen ist, den komplementären, zweiten Teil der Verriegelungsvorrichtung aufzunehmen, nämlich Vorsprünge (21), die sich an dem freien Ende (22) des Seitenabschnitts des Abdeckelements (20) befinden.

2. Vorrichtung nach Anspruch 1, **dadurch gekennzeichnet, dass** das Basisteil (10) an seiner Außenfläche eine Dichtungseinrichtung (80) aufweist.

3. Vorrichtung nach Anspruch 1, **dadurch gekennzeichnet, dass** zwischen den Aufnahmeelementen (12, 13) eine Dichtung (90) angeordnet ist.

4. Vorrichtung nach einem der vorangehenden Ansprüche, **dadurch gekennzeichnet, dass** das Basisteil (10) an seiner Außenfläche zumindest eine Ausstülpung (110) aufweist.

5. Vorrichtung nach einem der Ansprüche 1 bis 4, ferner enthaltend eine Verriegelungseinrichtung (14, 15, 16, 21) zum Verriegeln des Abdeckelements mit dem Basisteil (10).

6. Vorrichtung nach einem der Ansprüche 1 bis 5, wobei das Abdeckelement (20) eine Lochung aufweist, die in dem oberen Abschnitt (26) und/oder in einem oberen Ende (25) des Seitenabschnitts in Kontakt mit dem oberen Abschnitt (26) definiert ist.

7. Vorrichtung nach einem der Ansprüche 1 bis 6, wobei das Abdeckelement (20) eine Lochung aufweist, die sich von dem einen ersten Lochungsabschnitt (27) definierenden oberen Abschnitt (26) bis zu dem oberen Ende (25) des Seitenabschnitts des Abdeckelements erstreckt, das einen zweiten Lochungsabschnitt (41) definiert.

8. Vorrichtung nach Anspruch 6 oder 7, wobei randseitige Enden (29) des oberen Abschnitts (25) und/oder des Seitenabschnitts (24), die die Lochung (27, 41) definieren, eine Dichtung (100) aus einem nachgiebigen Material aufweisen.

9. Vorrichtung nach einem der vorangehenden Abschnitte, wobei der Seitenabschnitt (24) des Abdeckelements (20) einen Erweiterungsabschnitt (40) aufweist.

10. Vorrichtung nach einem der Ansprüche 1 bis 9, enthaltend ein Halteelement (50) in dem Abdeckelement (20).

11. Wand (60), enthaltend zumindest eine Abdeckvorrichtung (1) zum Abdecken eines Einbau-Strahlers, wie nach einem der vorangehenden Ansprüche definiert.

12. Bausatz, enthaltend die Abdeckvorrichtung nach einem der Ansprüche 1 bis 11 mit einem Einbau-Strahler, der eine Leuchte und eine Fassung enthält.

## Claims

1. Device (1) for covering a recessed spotlight, intended to be installed in a wall (60), comprising:
- a base (10) having an inner surface, an outer surface opposed to the inner surface, a thickness and an opening (11) passing through all the thickness, the outer surface of the base being in contact with the wall in a mounting position, the base (10) being of annular shape with an inside diameter Di and an outside diameter De; and
- a covering element (20) able to cover a spotlight, comprising an upper part (26) and at least one lateral part (24), said lateral part (24) having an upper end (25) in contact with the upper part,
**characterized in that**:
- the lower end (22) of the lateral part (24) is fixed removably to the inner surface of the base (10);
- the base (10) comprises reception elements (12, 13) on its inner surface that are intended to receive the lower end (22) of the lateral part of the covering element (20), said reception elements (12, 13) being at least two rails or two lips which are spaced apart from one another;
- the two rails or two lips (12, 13) respectively comprise through-openings (14, 15), one of which is defined perpendicularly to the radial direction and another is defined in the radial direction, these openings defining a first part of a bayonet-type locking device arranged to receive the second, complementary part of the locking device, namely protrusions (21) situated on the free end (22) of the lateral part of the covering element (20).

2. Device according to Claim 1, **characterized in that** the base (10) comprises a sealing device (80) on its outer surface.

3. Device according to Claim 1, **characterized by** the fact that a seal (90) is arranged between the reception elements (12, 13).

4. Device according to one of the preceding claims, **characterized in that** the base (10) comprises at least one protuberance (110) on its outer surface.

5. Device according to one of Claims 1 to 4, additionally comprising a device (14, 15, 16, 21) for locking the covering element with the base (10).

6. Device according to one of Claims 1 to 5, in which the covering element (20) comprises a hole defined in the upper part (26) and/or in an upper end (25) of the lateral part in contact with the upper part (26).

7. Device according to one of Claims 1 to 6, in which the covering element (20) comprises a hole extending from the upper part (26), defining a first hole part (27), to the upper end (25) of the lateral part of the covering element, defining a second hole part (41).

8. Device according to Claim 6 or 7, in which edge ends (29) of the upper part (25) and/or of the lateral part (24) defining the hole (27; 41) comprise a seal (100) made of a flexible material.

9. Device according to one of the preceding claims, in which the lateral part (24) of the covering element (20) comprises an extension part (40).

10. Device according to one of Claims 1 to 9, comprising a support element (50) in the covering element (20).

11. Wall (60) comprising at least one device (1) for covering a recessed spotlight, as defined according to one of the preceding claims.

12. Kit comprising the covering device defined according to one of Claims 1 to 11 with a recessed spotlight comprising a lamp and a mou
